# EUROPÄISCHE PATENTSCHRIFT

(11) **EP 1 391 236 B1**
(45) Veröffentlichungstag und Bekanntmachung des Hinweises auf die Patenterteilung: **05.07.2006**
(21) Anmeldenummer: 03018547.4
(22) Anmeldetag: 18.08.2003
(51) Int. Cl.: B01F 3/08, B01F 3/10

(54) **Vorrichtung und Verfahren zum Mischen zweier Fluids**
Apparatus and method for mixing two fluids
Appareil et procédé pour mélanger deux fluides

(30) Priorität: 21.08.2002 DE 10239189
(43) Veröffentlichungstag der Anmeldung: 25.02.2004
(60) Teilanmeldung: 05027071.9
(73) Patentinhaber: Endress + Hauser Flowtec AG, 4153 Reinach BL 1 (CH)
(72) Erfinder: Breithaupt, Hartmut, 74533 Schwäbisch Hall. (DE)
(74) Vertreter: Andres, Angelika Maria

(56) Entgegenhaltungen:
- WO-A-01/93997
- DE-C- 10 030 775
- US-A- 4 262 686
- US-A- 4 938 256

## Beschreibung

Die Erfindung betrifft eine Vorrichtung sowie ein Verfahren zum Mischen wenigstens zweier, insb. hinsichtlich ihrer Viskosität voneinander verschiedener, Fluide.

Zur industriellen Herstellung von Fluidgemischen, wie z.B. Getränken oder Suspensionen, bestehend aus zwei oder mehreren fluiden Komponenten werden oftmals ein erstes und ein zweites Fluid aus zwei getrennten diese jeweils voneinander zunächst getrennt führenden ersten bzw. zweiten Fluidleitung in eine die beiden Fluide gemeinsam führende weiterführende Fluidleitung einströmen gelassen.

Das Einstellen des Mischungsverhältnisses eines solchen, durch Mischen eines in einer ersten Fluidleitung gehaltenen ersten Fluids und eines in einer zweiten Fluidleitung gehaltenen zweiten Fluids herzustellenden Fluidgemisches von vorgebbarer Masse oder von vorgebbarem Volumen erfolgt üblicherweise unter Zuhilfenahme einer Verhältnis-Regelung. Ein eine solche Verhältnis-Regelung verwirklichendes Verfahren umfaßt üblicherweise folgende Schritte:
- Einströmenlassen des ersten Fluids in eine mit der ersten Fluidleitung zumindest zeitweise verbundene dritte Fluidleitung gemäß einem vorgebbaren Sollwert für einen Volumen- oder eines Massendurchfluß des ersten Fluids,
- Einströmenlassen des zweiten Fluids in die mit der zweiten Fluidleitung ebenfalls zumindest zeitweise verbundene dritte Fluidleitung,
- Erfassen des Volumen- oder des Massendurchflusses des ersten Fluids und Erzeugen eines den erfaßten Durchfluß des ersten Fluids repräsentierenden ersten Meßsignals,
- Erfassen eines totalisierten Volumen- oder Massendurchflusses vom ersten Fluid und Erzeugen eines den vom ersten Fluid erfaßten totalisierten Durchfluß momentan repräsentierenden ersten Durchfluß-Meßwerts,
- Ermitteln eines momentanen Sollwerts für einen totalisierten Volumen- oder Massendurchfluß vom zweiten Fluid anhand des Sollwerts für einen Volumen- oder eines Massendurchfluß des ersten Fluids und/oder anhand des ersten Durchfluß-Meßwerts.

Untersuchungen haben nunmehr ergeben, daß bei vorgenannter Verhältnis-Regelung in verstärktem Maße Sedimentationseffekte auftreten können, daß also die beiden Fluide sich miteinander nur sehr unzureichend oder gar nicht vermischen. Dies tritt insb. auch dann vermehrt auf, wenn die Fluide hinsichtlich ihrer Viskosität voneinander deutlich verschieden sind.

Zudem kann bei der vorbeschriebenen Verhältnis-Regelung das Problem auftreten, daß bei Änderung der Führungsgröße, hier also der Änderung des Sollwerts für den Durchfluß des ersten Fluids, bei Änderung der Fluideigenschaften, insb. der Viskosität, oder aber auch bei kurzeittigen Schwankungen der Volumen- oder Massendurchflüsse das Mischungsverhältnis nicht ausreichend genau eingeregelt werden kann. Überdies ist eine Auslegung dieser Verhältnis-Regelung als eine adaptive, also sich selbst anpassende Regelung eher unzureichend oder nur mit sehr großem technischen Aufwand realisierbar.

Eine Aufgabe der Erfindung besteht nunmehr darin eine möglichst robuste, insb. auch während des Betriebes leicht adaptierbare, Gemisch-Regelung und/oder -Steuerung anzugeben, mittels der ein qualitativ hochwertiges Fluidgemisch auf recht einfache Weise herstellbar ist.

Zur Lösung der Aufgabe besteht die Erfindung in einer Vorrichtung zum Mischen wenigstens zweier, insb. hinsichtlich ihrer Viskosität voneinander verschiedener, Fluide, gemäß der Vorrichtung definiert in Anspruch 1.

Darüber hinaus besteht die Erfindung in einem Verfahren wie definiert in Anspruch 10.

Die erfindungsgemäße Vorrichtung umfaßt weiters ein in den Verlauf der ersten Fluidleitung eingesetztes erstes Durchfluß-Meßgerät zum Erfassen eines Volumen- und/oder eines Massendurchflusses des ersten Fluids und zum Erzeugen wenigstens eines den vom ersten Fluid erfaßten Durchfluß repräsentierenden ersten Meßsignals sowie ein in den Verlauf der zweiten Fluidleitung eingesetztes zweites Durchfluß-Meßgerät zum Erfassen eines Volumen- und/oder eines Massendurchfluß des zweiten Fluids und zum Erzeugen wenigstens eines den vom zweiten Fluid erfaßten Durchfluß repräsentierenden zweiten Meßsignals, wobei das erste Meßgerät zumindest zeitweise einen totalisierten Volumen- oder totalisierten Massendurchfluß vom ersten Fluid erfaßt und ein den vom ersten Fluid erfaßten totalisierten Durchfluß momentan repräsentierenden, insb. digitalen, ersten Durchfluß-Meßwert erzeugt sowie einen ersten Durchfluß-Regler, der unter Verwendung des ersten Meßsignals ein einen momentanen Einstellwert für das erste Durchfluß-Stellgerät repräsentierendes erstes Stellsignal erzeugt und einen zweiten Durchfluß-Regler, der unter Verwendung des zweiten Meßsignals ein einen momentanen Einstellwert für das zweite Durchfluß-Steitgerät repräsentierendes zweites Stellsignal erzeugt, wobei der erste und der zweite Durchfluß-Regler über wenigstens eine Meßdatenleitung miteinander verbunden sind und wobei der zweite Durchfluß-Regler das zweite Stellsignal für das zweite Dundlfluß-Stellgerät auch unter Verwendung des via Meßdatenleitung übertragenen ersten Durchfluß-Meßwerts erzeugt.

Nach einer bevorzugten ersten Ausgestaltung der erfindungsgemäßen Vorrichtung erfaßt das zweite Meßgerät zumindest zeitweise einen totalisierten Volumen- oder Massendurchfluß vom zweiten Fluid und erzeugt das zweite Meßgerät einen den vom zweiten Fluid erfaßten totalisierten Durchfluß momentan repräsentierenden, insb. digitalen, zweiten Durchfluß-Meßwert.

Nach einer bevorzugten zweiten Ausgestaltung der erfindungsgemäßen Vorrichtung erzeugt der erste Durchfluß-Regler das erste Stellsignal für das erste Durchfluß-Stellgerät auch unter Verwendung des via Meßdatenleitung übertragenen zweiten Durchfluß-Meßwerts.

Nach einer bevorzugten dritten Ausgestaltung der erfindungsgemäßen Vorrichtung sind die, insb. auch pulsieren gelassenen, Durchflüsse des ersten und/oder des zweiten Fluids diskontinuierlich ausgebildet.

Nach einer bevorzugten vierten Ausgestaltung der erfindungsgemäßen Vorrichtung sind die Durchflüsse des ersten und/oder des zweiten Fluids taktweise von Null verschieden eingestellt.

Nach einer bevorzugten fünften Ausgestaltung der erfindungsgemäßen Vorrichtung sind die Durchflüsse des ersten und des zweiten Fluids alternierend von Null verschieden eingestellt.

Nach einer bevorzugten sechsten Ausgestaltung der erfindungsgemäßen Vorrichtung empfängt der erster Durchfluß-Regler zumindest zeitweise ein einen momentanen Sollwert für den Durchfluß des ersten Fluids repräsentierendes, insb. digitales, Führungssignal.

Gemäß einer Variante der erfindungsgemäßen Vorrichtung sind die Durchftuß-Stellgeräte mittels der Stellsignale so angesteuert sind, daß die beiden Fluide alternierend in die dritte Fluidleitung einströmen, insb. auch so, daß jedes der beiden Fluide zumindest stromaufwärts der dritten Fluidleitung pulsierend strömt.

DE-A-100 30775 offenbart eine Dosiervorrichtung wo zwei Fluiden abwechselnd pulsierend zu dosiert werden.

Das erfindungsgemäße Verfahren umfaßt weiters die Schritte Erfassen eines Volumen- oder eines Massendurchflusses des ersten Fluids und Erzeugen eines den erfaßten Durchfluß des ersten Fluids repräsentierenden ersten Meßsignals, Erfassen eines totalisierten Volumen- oder Massendurchflusses vom ersten Fluid und Erzeugen eines den vom ersten Fluid erfaßten totalisierten Durchfluß momentan repräsentierenden ersten Durchfluß-Meßwerts, Ermitteln eines momentanen Sollwerts für einen totalisierten Volumen- oder Massendurchfluß vom zweiten Fluid und Einströmenlassen des zweiten Fluids in die mit der zweiten Fluidleitung ebenfalls zumindest zeitweise verbundene dritte Fluidleitung zumindest solange, bis der totalisierte Volumen- oder Massendurchfluß des zweiten Fluids dem ermittelten Sollwert entspricht.

Nach einer bevorzugten ersten Ausgestaltung des erfindungsgemäßen Verfahrens umfaßt dieses als weiteren Schritt das Erfassen eines Volumen- oder eines Massendurchflusses des zweiten Fluids und Erzeugen eines den erfaßten Durchfluß des zweiten Fluids repräsentierenden zweiten Meßsignals.

Nach einer bevorzugten zweiten Ausgestaltung des erfindungsgemäßen Verfahrens werden die Schritte Einströmenlassen des ersten bzw. des zweiten Fluids in die dritte Fluidleitung alternierend ausgeführt.

Nach einer bevorzugten dritten Ausgestaltung des erfindungsgemäßen Verfahrens werden dessen Schritte zum Erreichen einer vorgebbaren Menge für das Fluidgemisch wenigstens einmal, insb. aber mehrfach, wiederholt.

Gemäß einer Variante des erfindungsgemäßen Verfahren werden die Schritte Einströmenlassen des ersten bzw. des zweiten Fluids in die dritte Fluidleitung alternierend ausgeführt und dabei mehrfach wiederholt.

Ein Vorteil der Erfindung besteht darin, daß sich damit qualitativ hochwertige Gemische mit sehr genau eingestelltem Mischungsverhältnis auf relativ einfache Weise herstellen lassen. Überdies kann dabei auch auf bislang verwendet statische oder dynamische Mischer weitgehend verzichtet werden, da mit der Erfindung der Einfluß der rheologischen Eigenschaften, insb. der Viskosität, der zu mischenden Fluide auf die Trägheit des Mischvorgangs verringert worden ist. Vorteilhafte Anwendungen der Erfindungen können sich z.B. in der Nahrungsmittelherstellung sowie der pharmazeutischen oder chemischen Industrie ergeben.

Die Vorrichtung und das Verfahren der Erfindung sowie weitere Vorteile werden nun anhand von Ausführungsbeispielen und den Figuren der Zeichnung näher erläutert:
- Fig. 1: zeigt schematisch eine Ausgestaltung der erfindungsgemäßen Vorrichtung,
- Fig. 2: zeigt in einem Zeitdiagramm schematisch eine Abfolge von Schritten des erfindungsgemäßen Verfahrens und
- Fig. 3: zeigt schematisch eine weitere Ausgestaltung der Vorrichtung die nicht der Erfindung entspricht.

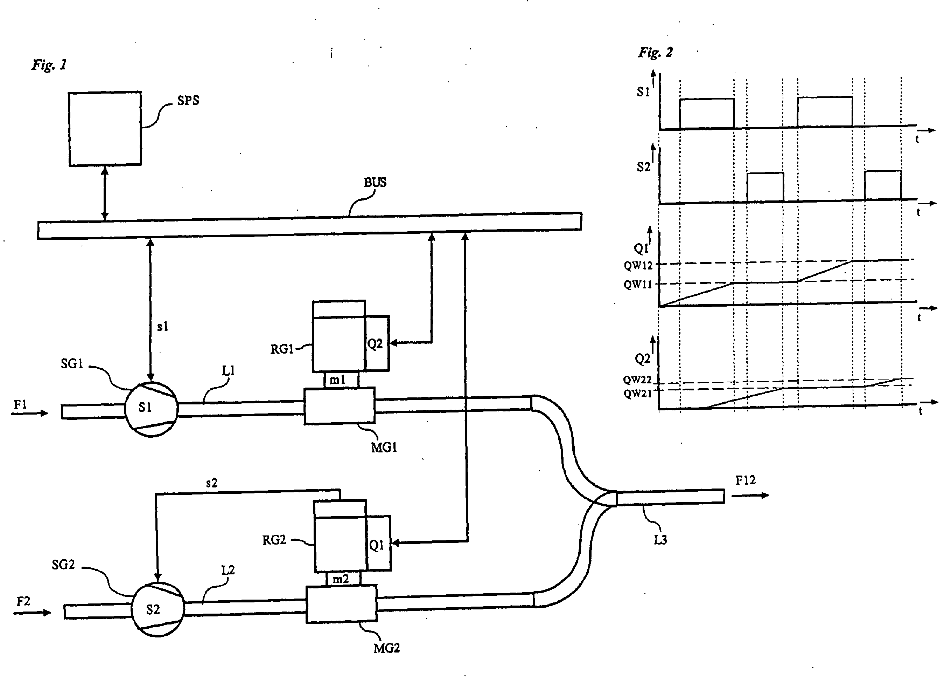

In der Fig. 1 ist ein Ausführungsbeispiel für eine erfindungsgemäße Vorrichtung schematisch dargestellt, die dazu dient ein Fluidgemisch F12, bestehend wenigstens einem ersten Fluid F1 und einem zweiten Fluid F2 in einem vorgebbbarem Mischungsverhältnis F1:F2 herzustellen. Das vorgebene Mischungsverhältnis kann hierbei z.B. in einer mit der Vorrichtung via Feldbus BUS kommunizierenden speich-programmierbaren Steuerung SPS abgelegt sein und dort auch ggf. verändert werden.

Die Vorrichtung umfaßt eine erste Fluidleitung L1 zum Führen des ersten Fluids F1 sowie eine zweite Fluidleitung L2 zum Führen des zweiten Fluids F2. An einer Verbindungsstelle sind die beiden Fluidleitung miteinander sowie mit einer weiterführenden dritten Fluidleitung L3 verbunden.

Zum Herstellen des Fluidgemisches F12 wird erfindungsgemäß zunächst das Fluid F1 durch Fluidleitung L1 hindurch in die Fluidleitung L3 einströmen gelassen, wobei ein entsprechend vorgebbarer Volumen- oder Massendurchfluß des Fluids F1 mittels eines in den Verlauf der Fluidleitung L1 eingesetzten erstes Durchfluß-Stellgeräts SG1 eingestellt wird. Nachdem eine vorgebbare Menge des Fluids 1 fließen gelassen worden ist, wird mittels des Durchfluß-Stellgeräts SG1 der Durchfluß des Fluids F1 auf Null gestellt und anschließend das Fluid F2 durch Fluidleitung L2 hindurch in die Fluidleitung L3 einströmen gelassen. Ein entsprechend vorgebbarer Volumen- oder Massendurchfluß des Fluids F2 wird in analoger Weise mittels eines in den Verlauf der Fluidleitung L2 eingesetzten zweiten Durchfluß-Stellgeräts SG2 eingestellt. Als Durchfluß-Stellgeräte SG1, SG2 können hierbei z.B. elektrisch steuerbare Pumpen, vorzugsweise eine Kolben- oder Zahnradpumpen, oder aber auch elektrisch steuerbare Ventile dienen.

Zum Einstellen des Volumen- oder Massendurchfluß des Fluids F1 ist nach einer Ausgestaltung der Erfindung darüber hinaus ein in den Verlauf der Fluidleitung L1 eingesetztes erstes Durchfluß-Meßgerät MG1 vorgesehen, das dazu dient, den für das Fluid F1 tatsächlich eingestellten Durchfluß zu erfassen und wenigstens ein den vom Fluid F1 erfaßten Durchfluß entsprechend repräsentierenden erstes Meßsignal m1 zu erzeugen. Das Meßsignal m1 wird einem ersten Durchfluß-Regler RG1 zugeführt, der unter Verwendung dieses Meßsignals m1 als auch eines vorgebbaren Sollwerts für den Volumen- oder Massendurchfluß des Fluids F1 ein einen momentanen Einstellwert S1 für das Durchfluß-Stellgerät SG1 repräsentierendes erstes Stellsignal s1 erzeugt, von welchem Einstellwert S1 ein zeitlicher Verlauf in Fig. 2 schematisch dargestellt ist.

Durchfluß-Meßgerät MG1 sowie Durchfluß-Regler RG1 können, wie in Fig. 1 schematisch dargestellt, in vorteilhafter Weise in einem einzigen, ggf. modular aufgebauten Gehäuse untergebracht sein; sie können selbstverständlich aber auch voneinander getrennt und dementsprechend über eine elektrische Verbindung in Kontakt stehend in der Vorrichtung angeordnet sein.

Nach einer Ausgestaltung der Erfindung dient als Durchfluß-Meßgerät MG1 ein Coriolis-Massendurchflußmeßgerät. Nach einer anderen Ausgestaltung der Erfindung wird ein zusätzlich auch eine Fluid-Dichte in der Fluidleitung L1 erfassendes Coriolis-Massendurchfluß-/ Dichtemeßgerät oder ein zusätzlich auch eine Fluid-Viskosität in der Fluidleitung L1 erfassendes Coriolis-Massendurchfluß-/ Dichte-Niskositätsmeßgerät als Durchfluß-Meßgerät MG1 verwendet.

Nach einer weiteren Ausgestaltung der Erfindung ist ferner vorgesehen, daß die aus Durchfluß-Meßgerät MG1 und Durchfluß-Regler RG1 gebildete erste funktionelle Einheit den vom Fluid F1 erfaßten Volumen- oder Massendurchflusses totalisiert, also über ein vorgebbares Zeitintervall integriert, und den vom Fluid F1 erfaßten totalisierten Durchfluß momentan repräsentierenden ersten Durchfluß-Meßwert Q1 erzeugt. Der, z.B. ebenfalls mittels des Durchfluß-Meßgeräts MG1 erzeugte, Durchfluß-Meßwert Q1 wird im Durchfluß-Regler RG1 wiederholt mit einem vorgebenen ersten Sollwert QW11 für den totalisierten Volumen- oder Massendurchfluß verglichen. Ausgehend von diesem Vergleich wird Sollwert für den Volumen- oder Massendurchfluß des Fluids F1 solange von Null verschieden gehalten, bis der Durchfluß-Meßwert Q1 seinen zugehörigen Sollwert QW11 erreicht oder überschritten hat, vgl. Fig. 2.

Gemäß einer weiteren Ausgestaltung der Erfindung wird mittels der Vorrichtung nach dem Erreichen des Sollwerts QW11 ausgehend vom vorgegebenen Mischungsverhältnis F1:F2 und anhand des momentan ermittelten Durchfluß-Meßwerts Q1 ein erster Sollwert QW21 für einen vom Fluid F2 noch zu erfassenden totalisierten Volumen- oder Massendurchfluß gebildet.

Zum Erzeugen eines entsprechenden, den vom Fluid F2 erfaßten totalisierten Durchfluß momentan repräsentierenden zweiten Durchfluß-Meßwerts Q2 und zum Vergleichen deselben mit dem Sollwert QW21 umfaßt die Vorrichtung gemäß einer weiteren Ausgestaltung der Erfindung ein in den Verlauf der Fluidleitung L2 eingesetztes zweites Durchfluß-Meßgerät MG2 sowie einen mit diesem, z.B. direkt oder via Feldbus BUS, gekoppelten zweiten Durchfluß-Regler RG2. Das Durchfluß-Meßgerät MG2 erfaßt den für das Fluid F2 tatsächlich eingestellten Durchfluß und erzeugt wenigstens einen den vom Fluid F2 erfaßten Durchfluß entsprechend repräsentierenden zweites Meßsignal m2.

Nach einer weiteren Ausgestaltung der Erfindung wird auch als Durchfluß-Meßgerät MG2 ein ein zusätzlich auch eine Fluid-Dichte in der angeschlossenen Fluidleitung L2 erfassendes Coriolis-Massendurchfluß-/Dichtemeßgerät oder ein zusätzlich auch eine Fluid-Viskosität in der angeschlossenen Fluidleitung L2 erfassendes Coriolis-Massendurchfluß-/Dichte-Niskositätsmeßgerät verwendet. Gemäß einer weiteren Ausgestaltung der Erfindung ist das Durchfluß-Meßgerät MG2 typlgleich zum Durchfluß-Meßgerät MG1.

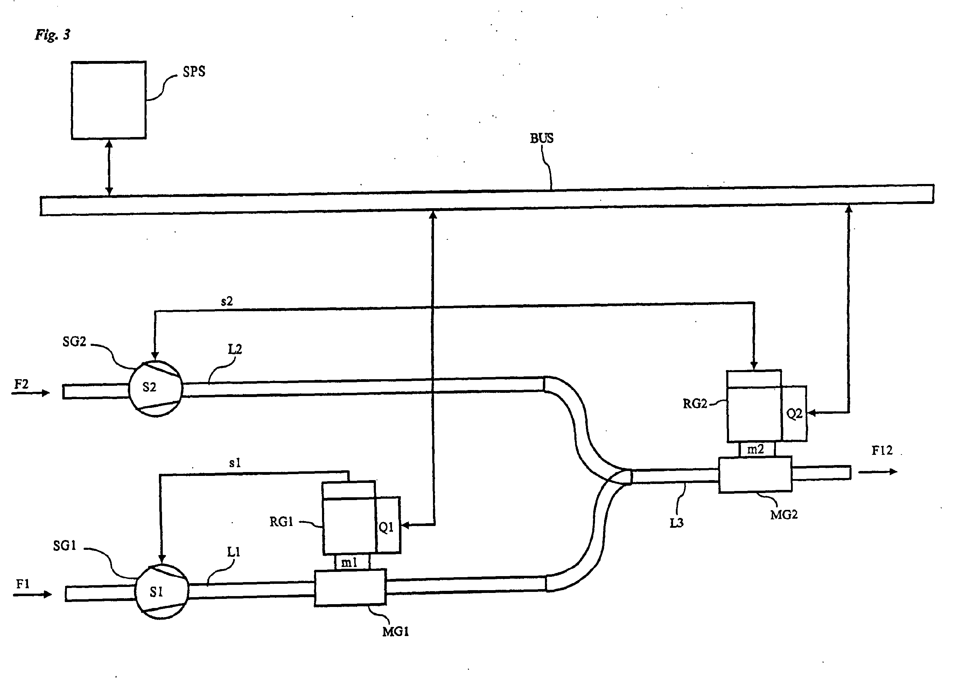

Nach einer anderen Ausgestaltung der Erfindung ist das Durchfluß-Meßgerät MG2, wie in Fig. 3 schematisch dargestellt, in den Verlauf der Fluidleitung L3 eingesetzt, um einen für das Fluidgemisch F12 eingestellten oder sich tatsächlich ergebenden Durchfluß zu erfassen und wenigstens ein diesem erfaßten Durchfluß entsprechend repräsentierenden Meßsignal m2' zu erzeugen. Insbesondere bei dieser Ausgestaltung ist die Verwendung eines Coriolis-Massendurchfluß-/Dichte-Viskositätsmeßgerät als Durchfluß-Meßgerät MG2 von besonderem Vorteil, da damit u.a. auch die Qualität des Fluidgemisches F12 direkt, insb. auch unmittelbar nach der Herstellung des Fluidgemissches, erfaßt und überwacht werden kann.

Zum gegenseitigen Austausch von Meßdaten, insb. aber zum Empfangen des Sollwerts QW21, ist die aus Durchfluß-Meßgerät MG2 und Durchfluß-Regler RG2 gebildete zweite funktionelle Einheit mit der aus Durchfluß-Meßgerät MG1 und Durchfluß-Regler RG1 gebildeten ersten funktionelle Einheit über eine vorzugsweise mittels des Feldbusses BUS realisierte Meßdatenleitung miteinander gekoppelt; die Meßdatenleitung kann aber z.B. auch eine die beiden Durchfluß-Reglem RG1, RG2 direkt verbindende Datenleitung sein.

Anhand des Meßsignals m2 sowie eines vorgebbaren Sollwerts für den Volumen- oder Massendurchfluß des Fluids F2 ermittelt der Durchfluß-Regler RG2 einen momentanen Einstellwert S2 für das Durchfluß-Stellgerät SG2 und sendet diesen mit Hilfe eines zweiten Stellsignals s2 an das Durchfluß-Stellgerät SG2. Darüber hinaus totalisiert die zweite funktionelle Einheit, vorzugsweise das Durchfluß-Meßgerät MG2, den vom Fluid F1 erfaßten Volumen- oder Massendurchfluß und aktualisiert somit den Durchfluß-Meßwert Q2.

Erfindungsgemäß sind die beiden, beispielsweise als Recheck-Signale ausgebildeten, Stellsignale s1, s2, wie auch in Fig. 2 gezeigt, so ausgebildet und so getaktet, daß die Durchfluß-Stellgeräte SG1, SG2 alternierend angesteuert sind, so daß die beiden Fluide F1, F2 in entsprechender Weise alternierend in die dritte Fluidleitung L3 einströmen. Dies führt umgekehrt dazu, daß jedes der beiden Fluide F1, F2 zumindest stromaufwärts der dritten Fluidleitung L3 im wesentlichen diskontinuierlich, insb. pulsierend, strömt.

Nach einer weiteren Ausgestaltung der Erfindung ist ferner vorgesehen, daß der Durchfluß-Regler RG2 auch den Sollwert QW21 ermittelt; der Sollwert QW21 kann aber z.B. auch vom Durchfluß-Regler RG1 oder aber auch von der eingangs erwähnten Steuerung SPS bestimmt und an den Durchfluß-Regler RG2 übermittelt werden.

Nachdem der Durchfluß-Meßwert Q2 seinen zugehörigen Sollwert QW21 zumindest erreicht hat, veranlaßt der Durchfluß-Regler RG2 wiederum, daß der Durchfluß des Fluids F2 möglichst zeitnah auf Null gestellt wird, vgl. Fig. 2.

Nunmehr wird mittels der Vorrichtung, z.B. mittels der zweiten funktionellen Einheit, nach dem Erreichen des Sollwerts QW21, ggf. unter Verwendung des momentanen Durchfluß-Meßwerts Q1, und des Sollwerts QW11 ein zweiter Sollwert QW12 für den Durchfluß-Meßwert Q1 gebildet und an den Durchfluß-Regler RG1 übermittelt. Vorzugsweise ist der Sollwert QW12 aber gleich dem Sollwert QW11 eingestellt.

Sowohl dieser Sollwert QW12 als auch der Sollwert QW11 können aber z.B. auch innerhalb des Durchfluß-Regler RG1 als auch mittels der Steuerung SPS berechnet werden. Für den Fall, daß die Sollwerte QW11, QW12 vom Durchfluß-Regler RG2 oder von der Steuerung SPS ermittelt werden, empfängt der Durchfluß-Regler RG1 zumindest zeitweise ein, bevorzugt digitales, Führungssignal, das den vom Durchfluß-Regler RG2 bzw. der Steuerung SPS gesendeten, momentanen Sollwert QW11 bzw. QW12 überträgt.

Die vorbeschrieben Verfahrensschritte werden nunmehr solange wiederholt, bis das Fluidgemisch F12 in einer vorgebbaren Menge, also mit vorgegebener Masse oder mit vorgegebenem Volumen, hergestellt und/oder das Mischungsverhältnis mit der vorgegebenen Genauigkeit eingestellt worden ist. Demzufolge ist noch ein zweiter Sollwert QW22 für den Durchfluß-Meßwert Q2 zu ermitteln und mittels der zweiten funktionellen Einheit nochmals ein entsprechender totalisierter Massen- oder Volumendurchfluß einzustellen; der Sollwert QW22 kann dabei ebenfalls zum zuvor ermittelten Sollwert QW21 gleich sein.

Das wiederholte Anwenden der vorbeschriebenen Verfahrensschritte führt dazu, daß die die Durchflüsse der beiden zweiten Fluide F1, F2 lediglich taktweise von Null verschieden eingestellt und somit die Fluid F1, F2 jeweils nur diskontinuierlich, insb. pulsierend, fließen gelassen werden. Zu dem sind die Durchflüsse der Fluide vorzugsweise lediglich alternierend von Null verschieden eingestellt.

Ein Vorteil des Verfahrens besteht u.a. auch darin, daß das Mischungsverhältnis F1:F2 im wesentlichen durch ein Verhältnis der Pulsweiten der beiden Stellsignale s1, s2 eingestellt werden kann. Zudem kann aber auch eine Qualität des Fluidgemisches, beispielsweise ein gewünschter hoher Homogenitätsgrad des Fluidgemisches F12, in einfacher Weise durch Auswahl einer entsprechend hohen Taktfrequenz für die beiden Stellsignale s1, s2 gezielt beeinflußt werden. Darüberhinaus ist das erfindungsgemäße Verfahren vergleichsweise robust, so daß das Fluidgemisches auch mit gleichbleibend hoher Qualität hergestellt werden kann. Dementsprechend mag es für manche Anwendungen genügen, die Stellsignale s1, s2 zumindest für eine vorgebbare Dauer lediglich zeitgetaktet, insb. auch ohne ständige Überwachung der Fluidströmungen in den einzelnen Fluidleitungen L1, L2 oder L3, zu erzeugen.

## Patentansprüche

1. Vorrichtung zum Mischen wenigstens zweier, insb. hinsichtlich ihrer Viskosität voneinander verschiedener, Fluide, welche Vorrichtung umfaßt:
- eine erste Fluidleitung (L1) zum Führen eines zumindest zeitweise strömenden ersten Fluids (F1) sowie eine zweite Fluidleitung (L2) zum Führen eines zumindest zeitweise strömenden zweiten Fluids (F2), wobei die erste und die zweite Fluidleitung (L1, L2) an einer Verbindungsstelle mit einer die beiden, insb. miteinander vermischten, Fluide (F1, F2) weiterführenden dritten Fluidleitung (L3) verbunden sind,
- ein in den Verlauf der ersten Fluidleitung (L1) eingesetztes erstes Durchfluß-Stellgerät (SG1) zum Einstellen eines Volumen- oder eines Massendurchflusses des ersten Fluids (F1) sowie ein in den Verlauf der zweiten Fluidleitung (L2) eingesetztes zweites Durchfluß-Stellgerät (SG2) zum Einstellen eines Volumen- oder eines Massendurchflusses des zweiten Fluids (F2),
- ein in den Verlauf der ersten Fluidleitung (L1) eingesetztes erstes Durchfluß-Meßgerät (MG1) zum Erfassen eines Volumen- und/oder eines Massendurchflusses des ersten Fluids (F1) und zum Erzeugen wenigstens eines den vom ersten Fluid (F1) erfaßten Durchfluß repräsentierenden ersten Meßsignals (m1) sowie ein in den Verlauf der zweiten Fluidleitung (L2) eingesetztes zweites Durchfluß-Meßgerät (MG2) zum Erfassen eines Volumen- und/oder eines Massendurchfluß des zweiten Fluids (F2) und zum Erzeugen wenigstens eines den vom zweiten Fluid (F2) erfaßten Durchfluß repräsentierenden zweiten Meßsignals (m2), wobei das erste Meßgerät (MG1) zumindest zeitweise einen totalisierten Volumen oder totalisierten Massendurchfluß vom ersten Fluid (F1) erfaßt und ein den vom ersten Fluid (F1) erfaßten totalisierten Durchfluß momentan repräsentierenden, insb. digitalen, ersten Durchfluß-Meßwert (Q1) erzeugt sowie
- einen ersten Durchfluß-Regler (RG1), der unter Verwendung des ersten Meßsignals (m1) ein einen momentanen Einstellwert (S1) für das erste Durchfluß-Stellgerät (DG1) repräsentierendes erstes Stellsignal (s1) erzeugt und einen zweiten Durchfluß-Regler (RG2), der unter Verwendung des zweiten Meßsignals (m2) ein einen momentanen Einstellwert (S2) für das zweite Durchfluß-Stellgerät (SG2) repräsentierendes zweites Stellsignal (s2) erzeugt,
- wobei der erste und der zweite Durchfluß-Regler (RG1, RG2) über wenigstens eine Meßdatenleitung (BUS) miteinander verbunden sind und
- wobei der zweite Durchfluß-Regler (RG2) das zweite Stellsignal (s2) für das zweite Durchfluß-Stellgerät (SG2) auch unter Verwendung des via Meßdatenleitung (BUS) übertragenen ersten Durchfluß-Meßwerts (Q1) erzeugt.

2. Vorrichtung nach dem vorherigen Anspruch, bei der das zweite Meßgerät (MG2) zumindest zeitweise einen totalisierten Volumen- oder Massendurchfluß vom zweiten Fluid (F2) erfaßt und einen den vom zweiten Fluid (F2) erfaßten totalisierten Durchfluß momentan repräsentierenden, insb. digitalen, zweiten Durchfluß-Meßwert (Q2) erzeugt.

3. Vorrichtung nach dem vorherigen Anspruch, bei der der erste Durchfluß-Regler (RG1) das erste Stellsignal (s1) für das erste Durchfluß-Stellgerät (SG1) auch unter Verwendung des via Meßdatenleitung (BUS) übertragenen zweiten Durchfluß-Meßwerts (Q2) erzeugt.

4. Vorrichtung nach einem der vorherigen Ansprüche, bei der die Durchflüsse des ersten und/oder des zweiten Fluids (F1, F2) diskontinuierlich sind, insb. auch pulsieren gelassen werden.

5. Vorrichtung, nach einem der vorherigen Ansprüche, bei der die Durchflüsse des ersten und/oder des zweiten Fluids (F1, F2) taktweise von Null verschieden eingestellt sind.

6. Vorrichtung nach einem der vorherigen Ansprüche, bei der die Durchflüsse des ersten und des zweiten Fluids (F1, F2) alternierend von Null verschieden eingestellt sind.

7. Vorrichtung nach einem der vorherigen Ansprüche, bei der der erster Durchfluß-Regler (RG1) zumindest einen einen momentanen Sollwert (QW11, QW12) für den Durchfluß des ersten Fluids (F1) repräsentierendes, insb. digitales, Führungssignal empfängt.

8. Vorrichtung nach einem der vorherigen Ansprüche, wobei die Durchfluß-Stellgeräte (SG1, SG2) mittels der Stellsignale (s1, s2) so angesteuert sind, daß die beiden Fluide (F1, F2) alternierend in die dritte Fluidleitung (L3) einströmen.

9. Vorrichtung nach einem der vorherigen Ansprüche, wobei die Durchfluß-Stellgeräte (SG1, SG2) mittels der Stellsignale (s1, s2) so angesteuert sind, daß jedes der beiden Fluide (F1, F2) zumindest stromaufwärts der dritten Fluidleitung (L3) pulsierend strömt.

10. Verfahren zum Erzeugen eines durch Mischen eines in einer ersten Fluidleitung (L1) gehaltenen ersten Fluids (F1) und eines in einer zweiten Fluidleitung (L2) gehaltenen zweiten Fluids (F2) herzustellenden Fluidgemisches (F12) von vorgebbarer Masse und/oder von vorgebbarem Volumen, welches Verfahren folgende Schritte umfaßt:
- Einströmenlassen des ersten Fluids (F1) in eine mit der ersten Fluidleitung (L1) zumindest zeitweise verbundene dritte Fluidleitung (L3),
- Erfassen eines Volumen- oder eines Massendurchflusses des ersten Fluids (F1) und Erzeugen eines den erfaßten Durchfluß des ersten Fluids (F1) repräsentierenden ersten Meßsignals (m1),
- Erfassen eines totalisierten Volumen- oder Massendurchflusses vom ersten Fluid (F1) und Erzeugen eines den vom ersten Fluid (F1) erfaßten totalisierten Durchfluß momentan repräsentierenden ersten Durchfluß-Meßwerts (Q1),
- Ermitteln eines momentanen Sollwerts (QW21, QW22) für einen totalisierten Volumen- oder Massendurchfluß vom zweiten Fluid (F2) und
- Einströmenlassen des zweiten Fluids (F2) in die mit der zweiten Fluidleitung (L2) ebenfalls zumindest zeitweise verbundene dritte Fluidleitung (L3) zumindest solange, bis der totalisierte Volumen- oder Massendurchfluß des zweiten Fluids (F2) dem ermittelten Sollwert (QW21 bzw. QW22) entspricht.

11. Verfahren nach dem vorherigen Anspruch, umfassend den weiteren Schritt Erfassen eines Volumen- oder eines Massendurchflusses des zweiten Fluids (F2) und Erzeugen eines den erfaßten Durchfluß des zweiten Fluids (F2) repräsentierenden zweiten Meßsignals (m2).

12. Verfahren nach Anspruch 10 oder 11, wobei die Schritte Einströmenlassen des ersten bzw. des zweiten Fluids (F1, F2) in die dritte Fluidleitung (L3) alternierend ausgeführt und dabei mehrfach wiederholt werden.

13. Verfahren nach einem der Ansprüche 10 bis 12, umfassend den weiteren Schritt Erfassen einer Fluid-Dichte in wenigstens einer der drei Fluidleitungen (L1, L2, L3).

14. Verfahren nach einem der Ansprüche 10 bis 13, umfassend den weiteren Schritt Erfassen einer Fluid-Vskosität in wenigstens einer der drei Fluidleitungen (L1, L2, L3).

## Claims

1. An apparatus for mixing at least two fluids, which are different from one another particularly with regard to their viscosity, which apparatus comprises:
- a first fluid line (L1) for conducting an at least intermittently flowing first fluid (F1), and a second fluid line (L2) for conducting an at least intermittently flowing second fluid (F2), the first and the second fluid line (L1, L2) being connected at a junction to a third fluid line (L3) conducting the two, particularly intermixed, fluids (F1, F2) onward,
- a first flow adjuster (SG1), inserted in the path of the first fluid line (L1), for setting a volume flow rate or mass flow rate of the first fluid (F1), and a second flow adjuster (SG2), inserted in the path of the second fluid line (L2), for setting a volume flow rate or mass flow rate of the second fluid (F2),
- a first flow meter (MG1), inserted in the path of the first fluid line (L1), for detecting a volume flow rate and/or mass flow rate of the first fluid (F1) and for generating at least one first measurement signal (m1) representing the flow rate detected from the first fluid (F1), and a second flow meter (MG2), inserted in the path of the second fluid line (L2), for detecting a volume flow rate and/or mass flow rate of the second fluid (F2) and for generating at least one second measurement signal (m2) representing the flow rate detected from the second fluid (F2), the first meter (MG1) detecting at least intermittently a totalised volume flow rate or totalised mass flow rate of the first fluid (F1) and generating a, particularly digital, first flow rate measured value (Q1) instantaneously representing the totalised flow rate detected from the first fluid (F1), and
- a first flow controller (RG1) which, using the first measurement signal (m1), generates a first control signal (s1) representing an instantaneous setting value (S1) for the first flow adjuster (DG1) [sic, recte (SG1)], and a second flow controller (RG2) which, using the second measurement signal (m2), generates a second control signal (s2) representing an instantaneous setting value (S2) for the second flow adjuster (SG2),
- the first and the second flow controller (RG1, RG2) being connected to one another via at least one measurement data line (BUS), and
- the second flow controller (RG2) generating the second control signal (s2) for the second flow adjuster (SG2) also using the first flow rate measured value (Q1) transmitted via the measurement data line (BUS).

2. An apparatus according to the preceding Claim, in which the second meter (MG2) at least intermittently detects a totalised volume flow rate or mass flow rate of the second fluid (F2) and generates a, particularly digital, second flow rate measured value (Q2) instantaneously representing the totalised flow rate detected from the second fluid (F2).

3. An apparatus according to the preceding Claim, in which the first flow controller (RG1) generates the first control signal (s1) for the first flow adjuster (SG1) also using the second flow rate measured value (Q2) transmitted via the measurement data line (BUS).

4. An apparatus according to one of the preceding Claims, in which the flows of the first and/or the second fluid (F1, F2) are discontinuous, particularly are also allowed to pulse.

5. An apparatus according to one of the preceding Claims, in which the flows of the first and/or the second fluid (F1, F2) are set in a timed manner so as to vary from zero.

6. An apparatus according to one of the preceding Claims, in which the flows of the first and the second fluid (F1, F2) are alternately set so as to vary from zero.

7. An apparatus according to one of the preceding Claims, in which the first flow controller (RG1) receives at least one, particularly digital, reference signal representing an instantaneous desired value (QW11, QW12) for the flow rate of the first fluid (F1).

8. An apparatus according to one of the preceding Claims, wherein the flow adjusters (SG1, SG2) are activated by means of the control signals (s1, s2) such that the two fluids (F1, F2) flow alternately into the third fluid line (L3).

9. An apparatus according to one of the preceding Claims, wherein the flow adjusters (SG1, SG2) are activated by means of the control signals (s1, s2) such that each of the two fluids (F1, F2) flows in a pulsed manner at least upstream of the third fluid line (L3).

10. A method for producing a fluid mixture (F12) of predeterminable mass and/or predeterminable volume, to be created by mixing a first fluid (F1) held in a first fluid line (F1) and a second fluid (F2) held in a second fluid line (L2), which method comprises the following steps:
- allowing the first fluid (F1) to flow into a third fluid line (L3) connected at least intermittently to the first fluid line (L1),
- detecting a volume flow rate or a mass flow rate of the first fluid (F1) and generating a first measurement signal (m1) representing the detected flow rate of the first fluid (F1),
- detecting a totalised volume flow rate or mass flow rate of the first fluid (F1) and generating a first flow rate measured value (Q1) instantaneously representing the totalised flow rate detected from the first fluid (F1),
- determining an instantaneous desired value (QW21, QW22) for a totalised volume flow rate or mass flow rate of the second fluid (F2), and
- allowing the second fluid (F2) to flow into the third fluid line (L3), similarly connected at least intermittently to the second fluid line (L2), at least until the totalised volume flow rate or mass flow rate of the second fluid (F2) corresponds to the determined desired value (QW21 or QW22).

11. A method according to the preceding Claim, comprising the further step of detecting a volume flow rate or mass flow rate of the second fluid (F2) and generating a second measurement signal (m2) representing the detected flow rate of the second fluid (F2).

12. A method according to Claim 10 or 11, wherein the steps of allowing the first or the second fluid (F1, F2) to flow into the third fluid line (L3) are implemented alternately and are also repeated several times.

13. A method according to one of Claims 10 to 12, comprising the further step of detecting a fluid density in at least one of the three fluid lines (L1, L2, L3).

14. A method according to one of Claims 10 to 13, comprising the further step of detecting a fluid viscosity in at least one of the three fluid lines (L1, L2, L3).

## Revendications

1. Dispositif destiné au mélange d'au moins deux fluides, différents entre eux notamment du point de vue de leur viscosité, lequel dispositif comprend :
- une première conduite de fluide (L1) pour l'acheminement d'un premier fluide (F1) s'écoulant au moins temporairement, ainsi qu'une deuxième conduite de fluide (L2) pour l'acheminement d'un deuxième fluide (F2) s'écoulant au moins temporairement, la première et la deuxième conduites de fluide (L1, L2) étant reliées en un point de jonction avec une troisième conduite de fluide (L3) acheminant notamment les deux fluides (F1, F2) mélangés entre eux,
- un premier régleur de débit (SG1) inséré dans la première conduite de fluide (L1), destiné au réglage d'un débit volumique ou massique du premier fluide (F1), ainsi qu'un deuxième régleur de débit (SG2) inséré dans la deuxième conduite de fluide (L2), destiné au réglage d'un débit volumique ou massique du deuxième fluide (F2),
- un premier débitmètre (MG1) inséré dans la première conduite de fluide (L1), destiné à la mesure d'un débit volumique et/ou d'un débit massique du premier fluide (F1) et à la génération d'au moins un premier signal de mesure (m1) représentant le débit mesuré du premier fluide (F1), ainsi qu'un deuxième débitmètre (MG2) inséré dans la deuxième conduite de fluide (L2), destiné à la mesure d'un débit volumique et/ou d'un débit massique du deuxième fluide (F2) et à la génération d'au moins un deuxième signal de mesure (m2) représentant le débit mesuré du deuxième fluide (F2), le premier débitmètre mesurant au moins temporairement un débit volumique totalisé ou un débit massique totalisé du premier fluide (F1) et générant une première valeur de débit mesurée (Q1), notamment numérique, représentant momentanément le débit totalisé mesuré du premier fluide (F1), ainsi que
- un premier régulateur de débit (RG1), qui génère en utilisant le premier signal de mesure (m1) un signal de réglage (s1) représentant une valeur de réglage (S1) instantanée pour le premier régleur de débit (SG1) et un deuxième régulateur de débit (RG2), qui génère en utilisant le deuxième signal de mesure (m2) un signal de réglage (s2) représentant une valeur de réglage (S2) instantanée pour le deuxième régleur de débit (SG2),
- le premier et le deuxième régulateur de débit (RG1, RG2) étant reliés entre eux par au moins une ligne de données de mesure (BUS) et
- le deuxième régulateur de débit (RG2) générant le deuxième signal de réglage (s2) pour le deuxième régleur de débit (SG2) également en utilisant la première valeur de débit mesurée (Q1) transmise par le biais de la ligne de données de mesure (BUS).

2. Dispositif d'après la revendication précédente, pour lequel le deuxième débitmètre (MG2) mesure au moins temporairement un débit volumique ou massique totalisé du deuxième fluide (F2) et génère une deuxième valeur de débit mesurée (Q2), notamment numérique, représentant momentanément le débit totalisé mesuré du deuxième fluide (F2).

3. Dispositif d'après la revendication précédente, pour lequel le premier débitmètre (RG1) génère le premier signal de réglage (s1) pour le premier régleur de débit (SG1), également en utilisant la deuxième valeur de débit mesurée (Q2) transmise par le biais de la ligne de données de mesure (BUS).

4. Dispositif d'après l'une des revendications précédentes, pour lequel les débits du premier et/ou du deuxième fluide (F1, F2) sont discontinus, notamment également pulsés.

5. Dispositif d'après l'une des revendications précédentes, pour lequel les débits du premier et/ou du deuxième fluide (F1, F2) sont réglés cycliquement à une valeur différente de zéro.

6. Dispositif d'après l'une des revendications précédentes, pour lequel les débits du premier et/ou du deuxième fluide (F1, F2) sont réglés alternativement à une valeur différente de zéro.

7. Dispositif d'après l'une des revendications précédentes, pour lequel le premier régulateur de débit (RG1) reçoit au moins un signal de référence, notamment numérique, représentant une valeur de consigne instantanée (QW11, QW12) pour le débit du premier fluide (F1).

8. Dispositif d'après l'une des revendications précédentes, où les régleurs de débit (SG1, SG2) sont commandés au moyen des signaux de réglage (s1, s2) de telle manière que les deux fluides (F1, F2) affluent alternativement dans la troisième conduite de fluide (L3).

9. Dispositif d'après l'une des revendications précédentes, où les régleurs de débit (SG1, SG2) sont commandés au moyen des signaux de réglage (s1, s2) de telle manière à ce que chacun des deux fluides (F1, F2) afflue de façon pulsée au moins en amont de la troisième conduite de fluide (L3).

10. Procédé pour la génération d'un mélange de fluides (F12) à fabriquer, obtenu par le mélangeage d'un premier fluide (F1) retenu dans une première conduite de fluide (L1) et d'un deuxième fluide (F2) retenu dans une deuxième conduite de fluide (L2), mélange d'une masse prédéfinissable et/ou d'un volume prédéfinissable, lequel procédé comprend les étapes suivantes :
- Afflux du premier fluide (F1) dans une troisième conduite de fluide (L3), reliée au moins temporairement à la première conduite de fluide (L1),
- Mesure d'un débit volumique ou massique du premier fluide (F1) et génération d'un premier signal de mesure (m1) représentant le débit mesuré du premier fluide (F1),
- Mesure d'un débit volumique ou massique totalisé du premier fluide (F1) et génération d'une première valeur de débit mesurée (Q1) représentant momentanément le débit totalisé mesuré du premier fluide (F1),
- Détermination d'une valeur de consigne (QW21, QW22) pour un débit volumique ou massique totalisé du deuxième fluide (F2) et
- Afflux du deuxième fluide (F2) dans la troisième conduite de fluide (L3), également reliée au moins temporairement à la deuxième conduite de fluide (L2), au moins jusqu'à ce que le débit volumique ou massique totalisé du deuxième fluide (L2) corresponde à la valeur de consigne (QW21 ou QW22) déterminée.

11. Procédé d'après la revendication précédente, englobant l'étape suivante Mesure d'un débit volumique ou massique du deuxième fluide (F2) et génération d'un deuxième signal de mesure (m2) représentant le débit mesuré du deuxième fluide (F2).

12. Procédé d'après la revendication 10 ou 11, où les étapes Afflux du premier ou du deuxième fluide (F1, F2) dans la troisième conduite de fluide (L3) sont exécutées de façon alternée et répétées à plusieurs reprises.

13. Procédé d'après l'une des revendications 10 à 12, englobant l'étape suivante Mesure d'une densité de fluide dans au moins l'une des trois conduites de fluide (L1, L2, L3).

14. Procédé d'après l'une des revendications 10 à 13, englobant l'étape suivante Mesure d'une viscosité de fluide dans au moins l'une des trois conduites de fluide (L1, L2, L3).
